**Europäisches Patentamt**

(19) **European Patent Office**

**Office européen des brevets**

(11) Numéro de publication: **0 033 681**
**B1**

(12) ## FASCICULE DE BREVET EUROPEEN

(45) Date de publication du fascicule du brevet:
**18.04.84**

(51) Int. Cl.³: **C 02 F 3/14,** C 02 F 3/16

(21) Numéro de dépôt: **81400092.3**

(22) Date de dépôt: **23.01.81**

(54) Dispositif pour la dispersion d'un liquide dans une phase gazeuse.

(30) Priorité: **01.02.80 FR 8002224**

(43) Date de publication de la demande:
**12.08.81 Bulletin 81/32**

(45) Mention de la délivrance du brevet:
**18.04.84 Bulletin 84/16**

(84) Etats contractants désignés:
**AT BE CH DE GB IT LI NL SE**

(56) Documents cités:
**FR - A - 2 022 818**
**FR - A - 2 023 739**
**FR - A - 2 187 400**
**FR - A - 2 195 476**
**US - A - 3 653 641**

(73) Titulaire: **Brucker, Christian, F-78490 Vicq (FR)**

(72) Inventeur: **Brucker, Christian, F-78490 Vicq (FR)**

(74) Mandataire: **CABINET BONNET-THIRION, 95 Boulevard Beaumarchais, F-75003 Paris (FR)**

ACTORUM AG

Dispositif pour la dispersion d'un liquide dans une phase gazeuse

La présente invention concerne un dispositif pour la dispersion d'un liquide dans une phase gazeuse, en particulier par entraînement du liquide confiné dans un lit ou bassin en un mouvement ascendant en vue de sa dispersion dans la phase gazeuse.

Un domaine particulièrement important de l'utilisation des dispositifs de ce genre est constitué par les aérateurs d'installations de traitement d'eaux usées, mettant en oeuvre une réaction biologique d'épuration par boues activées.

Dans cette technique d'épuration des eaux usées, divers types de dispositifs d'aération ont été successivement développés.

On a connu ainsi des systèmes surpresseurs adaptés à alimenter en air une canalisation située à proximité du niveau du radier du bassin d'activation, cette canalisation étant percée de trous, ou éventuellement équipée de diffuseurs poreux, afin de favoriser la création de bulles d'air qui traversent en remontant la masse de fluide à aérer.

Un autre type de technique fait appel à des brosses rotatives horizontales dont l'axe est situé au-dessus du plan d'eau, de façon à ce que des éléments radiaux, soit souples formant poils de la brosse, soit rigides formant pales, battent l'eau à la manière des roues à aubes des bateaux d'autrefois.

On a vu se développer enfin des turbines de surface dont le rotor vertical est équipé d'un corps immergé au niveau du plan d'eau qui bat l'interface aireau de façon à élever dans l'air une gerbe d'eau.

L'invention part de l'état de la technique constitué par cette troisième catégorie d'appareils, comportant une pompe, au moins partiellement immergée dans le liquide entre une tulipe d'aspiration et un ajutage de refoulement. L'expérience montre que dans les appareils de ce genre, l'hélice formant l'organe actif de la pompe travaille avec un mauvais rendement lequel est attribuable à la hauteur de la gerbe d'eau, nécessairement limitée, hauteur en général nettement inférieure au mètre, par exemple.

On sait que, pour assurer une bonne aération, il suffit de produire une gerbe dispersant les gouttes en pluie de très faible hauteur (moins d'un mètre, comme précité), en effet, l'interface liquide-air est saturée d'une manière presque immédiate.

A contrario, à des hauteurs manométriques totales aussi réduites, le rendement des pompes hydrauliques se révèle être très mauvais. Par ailleurs, ces aérateurs de surface n'offrent aucune possibilité d'une solution rationnelle au problème d'un mélange des couches basses du liquide (proches du radier du bassin) à celles intermédiaires et superdicielles; pour obtenir un tel mélange, même imparfait, on est conduit, avec les dispositifs connus à ce jour, à dépenser une puissance d'agitation superflue qui est sans rapport avec le besoin en oxygène.

L'invention a donc pour objet la création d'un dispositif d'entraînement de liquide du genre considéré offrant un rendement énergétique considérable amélioré par rapport aux turbines de surface connues.

Un autre objet de l'invention est la réalisation d'un dispositif d'entraînement de liquide du genre considéré dans des conditions particulièrement favorables à l'efficacité de processus biologiques de traitement d'eaux usées.

Un dispositif selon l'invention comportant, en combinaison avec un moteur d'entraînement, une pompe au moins partiellement immergée dans le liquide entre une tulipe d'aspiration et un ajutage de refoulement situé à proximité de l'interface liquide-gaz, avec une surface externe de révolution de profil évasé, est essentiellement caractérisé en ce qu'une tulipe d'aspiration, dite primaire, disposée à proximité du fond du lit ou bassin, est raccordée à l'ajutage de refoulement par une conduite de hauteur adaptable à la profondeut de la couche liquide, la pompe étant immergée au voisinage de la tulipe d'aspiration.

Selon un mode de réalisation préférentiel, il est prévu l'aménagement d'une tulipe secondaire, extérieurement concentrique à ladite tulipe primaire, le flux ascendant de la tulipe primaire créant par entraînement un flux ascendant secondaire se mélant à lui en aval de la pompe.

Un dispositif ainsi agencé permet de pallier les inconvénients précités et offre un ensemble d'avantages concordants de nature à accroître, dans une mesure surprenante, l'efficacité des processus d'épuration biologique mettant en oeuvre des boues activées.

En effet, en puisant l'eau au niveau du radier, l'aération affecte impérativement et plus efficacement les boues qui se trouvent entraînées dans le mouvement d'aspiration engendré par le flux primaire avec une action directe sur les micro-organismes portés par ces boues.

L'expérience montre qu'une conséquence de ce pompage des boues au niveau du radier est une meilleure élimination de la demande chimique en oxygène. Par ailleurs, la création d'un flux secondaire se traduit par un accroissement du débit pour un même travail de la pompe donc par une amélioration de rendement énergétique.

Par ailleurs, jusqu'à présent, les constructeurs d'installations de traitement des eaux usées devaient réaliser un bassin en fonction des caractéristiques de l'aérateur, notamment des mouvements des fluides et en tenant compte des sédimentations parasites. Désormais, le constructeur pourra réaliser le bassin qu'il souhaite, l'invention offrant la possibilité d'une adaption de l'aérateur aux particularités de son bassin.

Les conditions de fonctionnement d'un dispositif selon l'invention sont pratiquement indépendantes des mouvements éventuels du plan d'eau, alors que ces mouvements affectent les conditions de fonctionnement et en particulier le rendement énergétique des «aérateurs de surface» de la technique antérieure.

Selon une forme préférée de réalisation de l'invention, l'ajutage de refoulement est avantageusement équipé d'une surface de confinement interne en forme de pointeau dont la position en hauteur peut être rendue réglable par tous moyens. Ainsi, la gerbe d'eau est modulable par construction; l'angle de tir peut être déterminé par le choix de la forme de l'ajutage de refoulement, tandis que la distance de tir peut éventuellement être de son côté modulée par action du pointeau sur la surface externe de confinement.

Les caractéristiques et avantages de l'invention ressortiront d'ailleurs de la description qui va suivre à titre d'exemple en référence aux dessins annexés dans lesquels:

la figure 1 est une vue en perspective d'une forme de réalisation du dispositif conforme à l'invention;

la figure 2 est une vue correspondante en élévation en coupe axiale;

la figure 3 est une vue semblable à la précédente relative à une variante à bouée cylindrique;

la figure 4 est une vue en coupe axiale d'une autre variante à bouée cylindrique.

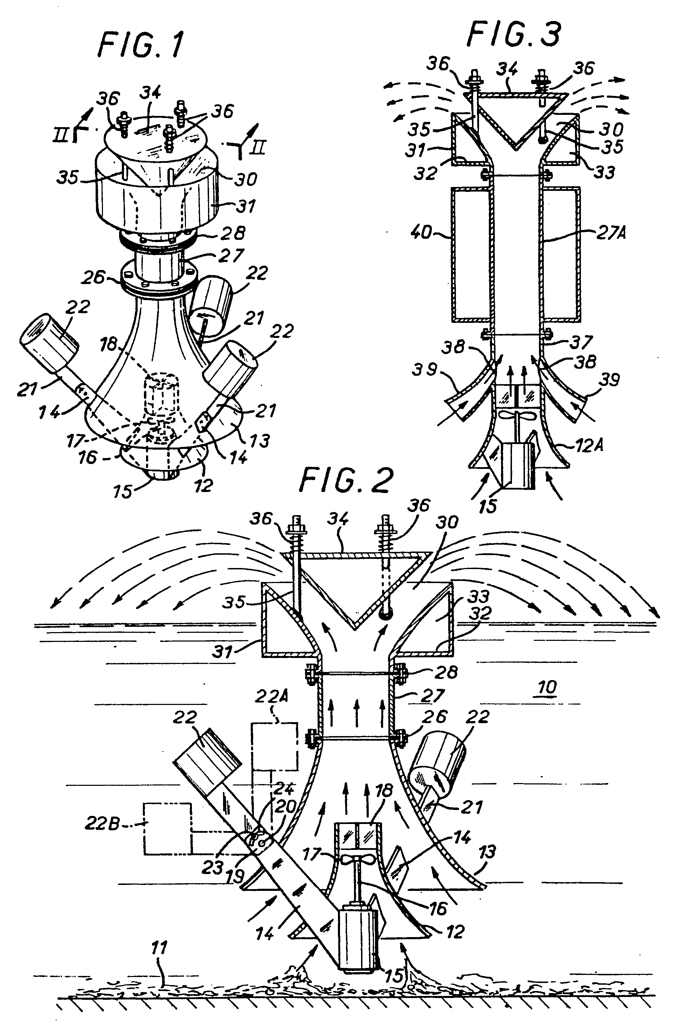

Suivant la forme de réalisation choisie et représentée aux figures 1 et 2, le dispositif immergé dans un bassin 10, avec radier 11, comporte une tulipe d'aspiration primaire 12, disposée coaxialement à l'intérieur dune tulipe secondaire 13, étant maintenue dans celle-ci par une série de trois bras radiaux 14. Ces bras se prolongent à l'intérieur de la tulipe d'aspiration 12 pour maintenir dans l'axe de celle-ci un moteur électrique d'entraînement 15 dont l'arbre 16 porte une roue hélicoïdale de refoulement 17. En aval de cette roue la tulipe d'aspiration se termine par un tronçon de conduit 18 équipé de manière connue en soi d'une série d'ailettes de redressement de l'écoulement.

Chacun des bras supports 14 comporte également un prolongement du côté extérieur de la tulipe secondaire 13, prolongement tel que 19 en bout duquel est articulé sur un axe 20 un bras ou un élément de bras orientable 21 portant à son extrémité une bouée de sustentation 22, l'ensemble formé par cet élément de bras 21 et cette bouée 22 pouvant se fixer au moyen, par exemple, d'un boulon de serrage 23 et d'une fente en arc de cercle 24 centrée sur l'axe 20 en une position réglable entre deux positions extrémes, comme indiqué respectivement en 22A-22B. La position indiquée en 22A est une position d'encombrement réduit, notamment pour le transport où la sustentation est assurée avec un couple minimum. L'autre position extrême 22B correspond, au contraire, à la sustentation evec un couple maximal de stabilisation.

La tulipe d'aspiration secondaire 13 aboutit à une bride 26 de raccordement à un élément de conduit 27, à l'autre extrémité duquel se trouve une autre bride 28 permettant le raccordement d'un ajutage de refoulement 30 offrant une surface externe de confinement de l'écoulement constitué par une surface de révolution de profil évasé. Cette surface d'ajutage confine, d'autre part, en coopération avec une surface externe, par exemple cylindrique, 31, et un fond 32, un volume d'air 33 formant bouée centrale de sustentation et de stabilisation.

Enfin, un corps de forme conique 34 adapté à coulisser sur une série de tiges de guidage 35 parallèles à l'axe du dispositif constitue un pointeau de confinement intérieur de l'écoulement, la position en hauteur de ce pointeau étant par exemple influencée, dans le cas de la forme de réalisation représentée, par l'écrasement de ressorts comprimés 36.

Un dispositif ainsi constitué est adapté à flotter dans la masse liquide, ses bouées de sustentation 22 et 33 étant déterminées de telle sorte que le bord supérieur de l'ajutage de refoulement 30 se place à une distance voulue au-dessus du plan liquide. Alors que les bouées de sustentation 22 peuvent s'escamoter en vue du transport en réduisant l'encombrement du dispositif, en leur position déployée 22B elles assurent la stabilisation du dispositif au sein de la masse liquide avec un couple maximum. L'élément de conduit 27 est interchangeable, sa dimension axiale étant choisie de telle sorte que le bord inférieur de la tulipe d'aspiration 12 se situe, compte tenu du dépassement éventuel du bloc moteur 15, à une faible distance du radier 11. En fonctionnement le pompage s'effectue ainsi avec une hauteur correspondant à la quasi totalité de la profondeut du bassin et les boues tendant à se déposer sur le radier de celui-ci se trouvent nécessairement entraînées dans le mouvement. Au courant primaire aspiré par la tulipe 12 s'ajoute un courant additionnel aspiré dans la tulipe secondaire 13; cette disposition contribue à augmenter le rendement pour une hauteur manométrique donnée.

Un résultat semblable est obtenu dans le cas de la variante de réalisation de la figure 3 qui ne porte pas de tulipe secondaire, mais où en aval de la tulipe primaire 12A et en amont du conduit de transition 27A est ménagé un tronçon de conduit 37 comportant sur sa périphérie une série d'orifices 38 chacun de ces orifices étant avantageusement associé dans ce cas à un ajutage de guidage d'écoulement 39. Les orifices ainsi ménagés remplacent la tulipe secondaire avec un effet comparable d'augmentation du débit de pompage.

On trouve, d'autre part, sur la variante de réalisation de la figure 3 l'aménagement autour du conduit de transition 27A et pratiquement sur toute la hauteur de celui-ci, d'une bouée cylindrique de sustentation 40. Dans une telle forme de réalisation la stabilité du dispositif peut être améliorée de façon connue en soi par la disposition en surface, soit d'un flotteur toroïdal, soit d'une série de flotteurs disposés au bout de bras porteurs de longueur appropriée pour éviter toute interférence indésirable avec la nappe de dispersion.

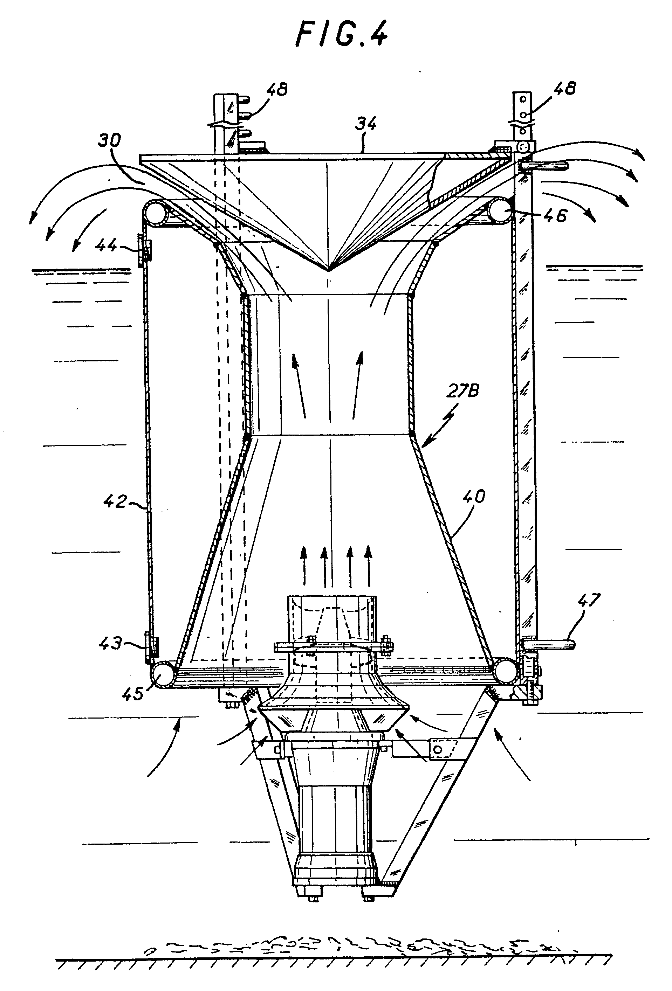

Dans la variante de réalisation de la figure 4, le conduit de transition 27B présente un tronçon tronconique 40 faisant office de tulipe d'aspiration secondaire. La bouée coaxiale 42 est munie d'orifices 43, 44 pour l'introduction ou l'évacuation du liquide ou du solide de lestage ainsi que de tores raidisseurs 45, 46 créant un arrondi du niveau de l'entrée du flux secondaire. Une manille 47 st prévue pour la manipulation ou le déplacement commandé de l'ensemble du dispositif. Les extensions 48 sont destinées au réglage du diffuseur, c'est-à-dire de la hauteur du pointeau 34 dans l'ajutage de refoulement 30.

En effet, quelle que soit la variante de réalisation, la forme de la nappe de dispersion peut être modulée pour un profil donné de l'ajutage de refoulement par un réglage approprié en hauteur du pointeau 34. Dans le cas de la forme de réalisation représentée du pointeau 34 soumis à l'action de ressorts comprimés 36 (fig. 1, 2 et 3), la position en hauteur du pointeau varie en fonction des caractéristiques des ressorts et de la poussée hydraulique.

Dans le cas de la forme de réalisation de la figure 4, l'action des ressorts est supposée être remplacée par la masse du pointeau.

Dans une forme de réalisation plus élaborée, il est prévu au contraire un dispositif de réglage adapté à déterminer la hauteur du pointeau selon une loi d'asservissement appropriée quelconque, par des moyens en soi connus.

Outre les avantages délà exposés, l'homme de l'art appréciera ceux découlant:

— de l'absence d'un mécanisme réducteur (attaque directe de l'hélice par le moteur),

— d'un arbre de transmission ultra-court,

— de paliers protégés par huile puisque situés dans la chambre de moteur,

— de l'absence d'un bruit mécanique (celui de l'eau retombant en cascade peut être très amorti au moyen d'un écran),

— de l'extrême facilité d'adaptation du dispositif («à la demande») à la profondeur du bassin par dimensionnement correspondant du conduit intermédiaire entre tulipe d'aspiration et diffuseur (les caractéristiques du bassin sont indépendantes de l'aérateur),

— de la modulation offerte au niveau du diffuseur,

— des facilités de manipulation et de déplacement du fait de l'auto-sustentation (réglable) du dispositif selon l'invention,

— de la possibilité d'injecter des produits d'addition de toute nature.

Il va de soi que l'invention se prête à de nombreuses variations qui toutes en font partie intégrante.

## Reventications

1. Dispositif d'entraînement d'un liquide confiné dans un lit ou bassin en un flux ascendant pour dispersion dans une phase gazeuse, dispositif du genre comportant en combinaison avec un moteur d'entraînement, une pompe immergée dans le liquide entre une tulipe d'aspiration et un ajutage de refoulement situé à proximité de l'interface liquide-gaz avec une surface externe de révolution de profil évasé, caractérisé en ce qu'une tulipe d'aspiration dite primaire (12) disposée à proximité du fond (11) du lit ou bassin est raccordée à l'ajutage de refoulement (30) par une conduite (27) de hauteur adaptable à la profondeur de la couche liquide, la pompe (15-17) étant disposée au voisinage de ladite tulipe d'aspiration.

2. Dispositif selon la revendication 1, caractérisé par l'aménagement d'une tulipe secondaire (13) extérieurement concentrique à ladite tulipe primaire (12), le flux ascendant de ladite tulipe primaire créant par entraînement un flux ascendant secondaire se mélant à lui en aval de la pompe.

3. Dispositif selon la revendication 1, caractérisé par l'aménagement en amont de l'ajutage de refoulement, d'au moins une prise (39) en forme de tuyère ou d'orifice.

4. Dispositif selon l'une quelconque des revendications 1 à 3, caractérisé en ce qu'il est rendu flottable au moyen d'une bouée cylindrique (40, 42) coaxiale ménagée autout de la conduite 27.

5. Dispositif selon la revendication 4, caractérisé par des moyens d'accès (43, 44) pour modification du lestage de ladite bouée.

6. Dispositif selon l'une quelconque des revendications précédentes comportant un moteur disposé au-dessous de la pompe, caractérisé en ce que le moteur (15) est maintenu dans l'axe de la tulipe d'aspiration primaire (12) au moyen d'un groupe de trois bras radiaux (14) se raccordant à proximité de l'extrémité inférieure de ladite tulipe (12).

7. Dispositif selon les revendications 2 et 6, caractérisé en ce que des prolongements des bras radiaux précités (14) constituent des moyens de liaison entre les tulipes primaire (12) et secondaire (13).

## Patentansprüche

1. Vorrichtung zur Aufwärtsförderung einer in einem Bett oder Becken eingeschlossenen Flüssigkeit zur Verteilung in einer Gasphase, wobei die Vorrichtung in Kombination einen Antriebsmotor und eine Pumpe aufweist, die in die Flüssigkeit zwischen einem Ansaugtrichter und einer nahe der Grenzfläche Flüssigkeit-Gas befindlichen Auslassdüse mit einer als Rotationsfläche mit sich erweiterndem Profil ausgebildeten Aussenfläche eingetaucht ist, dadurch gekennzeichnet, dass ein erster Ansaugtrichter (12) in der Nähe des Bodens (11) des Bettes oder Beckens angeordnet und mit der Auslassdüse (30) durch eine Leitung (27) von einer auf die Tiefe der Flüssigkeitsschicht einstellbaren Höhe verbunden ist, wobei die Pumpe (15-17) in der Nähe des Ansaugtrichters angeordnet ist.

2. Vorrichtung nach Anspruch 1, dadurch gekennzeichnet, dass ein zweiter Trichter (13) ausserhalb des ersten Trichters (12) konzentrisch zu diesem angeordnet ist, so dass der Aufwärtsstrom des ersten Trichters durch Mitreissen einen sekundären Aufwärtsstrom erzeugt, der sich mit ihm stromabwärts von der Pumpe vermischt.

3. Vorrichtung nach Anspruch 1, dadurch gekennzeichnet, dass stromaufwärts von der Auslassdüse mindestens ein Einlass (39) in Form einer Düse oder Öffnung vorgesehen ist.

4. Vorrichtung nach einem der Ansprüche 1 bis 3, dadurch gekennzeichnet, dass sie mittels eines zylindrischen Schwimmers (40, 42), der koaxial um die Leitung (27) angeordnet ist, schwimmfähig ausgebildet ist.

5. Vorrichtung nach Anspruch 4, gekennzeichnet durch Zugangsvorrichtungen (43, 44) zur Ballastveränderung des Schwimmers.

6. Vorrichtung nach einem der vorangehenden Ansprüche, welche einen unter der Pumpe angeordneten Motor aufweist, dadurch gekennzeichnet, dass der Motor (15) mittels einer Gruppe von drei Radialarmen (14), die in der Nähe des unteren Endes des ersten Ansaugtrichters (12) verbunden sind, in der Achse des ersten Ansaugtrichters (12) gehalten ist.

7. Vorrichtung nach den Ansprüchen 2 und 6, dadurch gekennzeichnet, dass Verlängerungen der Radialarme (14) Verbindungsvorrichtungen zwischen dem ersten Trichter (12) und zweiten Trichter (13) bilden.

**Claims**

1. Device for forcing a liquid confined in a bed or tank into an ascending stream for dispersion in a gas phase, said device being of the kind comprising, in combination with a drive motor, a pump submerged in the liquid between a flared suction tube and a delivery nozzle which is located proximate to the liquid-gas interface and has an outer surface of revolution with a flared profile, characterized in that a flared suction tube called a primary flared suction tube (12) disposed proximate to the bottom (11) of the bed or tank is connected to the delivery nozzle (30) through a conduit (27) having a height adaptable to the depth of the liquid layer, the pump (15-17) being disposed in the vicinity of the said flared suction tube.

2. Device according to claim 1, characterized by the arrangement of a secondary flared tube (13) externally concentric with the said primary flared tube (12), the ascending stream of said primary flared tube creating by entrainment a secondary ascending stream which mixes with the ascending stream downstream of the pump.

3. Device according to claim 1, characterized by the arrangement of at least one intake (39) in the form of nozzle or port, upstream of the delivery nozzle.

4. Device according to any one of claims 1 to 3, characterized in that the device is made floatable by means of a coaxial cylindrical buoy (40, 42) arranged around the conduit (27).

5. Device according to claim 4, characterized by access means (43, 44) for adjusting the ballast in the said buoy.

6. Device according to any one of the preceding claims, comprising a motor disposed beneath the pump, characterized in that the motor (15) is maintained on the axis of the primary flared suction tube (12) by means of a group of three radial arms (14) joined proximate to the lower end of the said flared tube (12).

7. Device according to claims 2 and 6, characterized in that the extensions of the aforesaid radial arms (14) constitute connecting means between the primary flared tube (12) and the secondary flared tube (13).

FIG.1

FIG.3

FIG.2

0 033 681

7

# FIG.4